# EUROPÄISCHE PATENTSCHRIFT

(11) **EP 2 190 911 B1**
(45) Veröffentlichungstag und Bekanntmachung des Hinweises auf die Patenterteilung: **30.03.2011**
(21) Anmeldenummer: 08785787.6
(22) Anmeldetag: 02.09.2008
(51) Int. Cl.: C08K 3/08, C08K 7/00

(54) **THERMOPLAST MIT METALLKENNZEICHNUNGSPLÄTTCHEN**
THERMOPLASTIC COMPRISING METAL IDENTIFICATION PLATELETS
THERMOPLASTE COMPRENANT DES PLAQUETTES DE MARQUAGE MÉTALLIQUES

(30) Priorität: 12.09.2007 DE 102007044146
(43) Veröffentlichungstag der Anmeldung: 02.06.2010
(73) Patentinhaber: Bayer MaterialScience AG, 51368 Leverkusen (DE)
(72) Erfinder: PUDLEINER, Heinz, 47800 Krefeld (DE); YESILDAG, Mehmet-Cengiz, 51377 Leverkusen (DE); POPHUSEN, Dirk, 51467 Bergisch Gladbach (DE); MEYER, Klaus, 41539 Dormagen (DE)
(86) Internationale Anmeldenummer: PCT/EP2008/007140
(87) Internationale Veröffentlichungsnummer: WO 2009/036878

(56) Entgegenhaltungen:
- WO-A-98/56850

## Beschreibung

Die Erfindung betrifft einen transparenten Thermoplast, enthaltend 0,0001 bis 2 Gew.-% im wesentlichen flache Metallkennzeichnungsplättchen mit einer größten Längenausdehnung von kleiner 200µm und einer Dicke von 2-10µm, einer runden oder n-eckigen Form mit n≥4, dadurch gekennzeichnet, dass die Metallkennzeichnungsplättchen keine Aussparungen haben oder Aussparungen haben, die im wesentlichen in der Mitte des Metallkennzeichnungsplättchens liegen, der umlaufenden Aussenkante des Metallkennzeichnungsplättchens nicht näher kommen als 20µm und nicht mehr als 30% der Oberfläche des Metallkennzeichnungsplättchens darstellen, dessen Herstellung und Verwendung zur Herstellung von Folien zur Personalisierung eines Kartenschichtverbundes und kartenförmiger Datenträger, insbesondere Smartkarten, Magnetstreifenkarten, Ausweiskarten und dergleichen.

Datenträger und insbesondere Wertdokumente werden zur Absicherung in der Regel mit Sicherheitselementen ausgestattet, die eine Überprüfung der Echtheit des Datenträgers gestatten und zugleich als Schutz vor unerlaubter Reproduktion des Datenträgers dienen. Als Sicherheitselemente kommen vielfach optisch variable Elemente zum Einsatz, die dem Betrachter mit unterschiedlichen Methoden, beispielweise IR- oder UV-Spektroskopie sowie Lichtmikroskopie, die Überprüfung der Echtheit des vorliegenden Wertdokumentes erlauben.

Metallkennzeichnungsplättchen können als Sicherheitselement dienen und sind grundsätzlich bekannt und z.B. in der WO 2005/078530 beschrieben.

Die Anwendung solcher Kennzeichnungsplättchen ist z.B. in dem europäischen Patent EP-A-1216758 beschrieben.

Vom britischen Patent GB 2346583 ist ein Microdot für Kennzeichnung der Produkte bekannt.

Der Erfindung liegt die Aufgabe zugrunde, ein Metallkennzeichnungsplättchen als Sicherheitselement in mindestens eine Schicht von thermoplastischen Schichtstoffen einzubringen, das eine wirkungsvolle Absicherung eines Datenträgers erlaubt. Insbesondere soll der abgesicherte Datenträger sowohl schwer nachzustellen sein als auch eine Überprüfung der Echtheit oder Unversehrtheit durch einen Fachmann ermöglichen. Da zu ist es erforderlich, dass die Metallkennzeichnungsplättchen während der verschiedenen thermoplastischen Ver- und Umarbeitungsschritte ihre charakteristischen Merkmale wie Form, Aufdruck, Hologramm und Durchgangsformbohrung nicht verändert werden.

Diese Aufgabe wird gelöst durch einen transparenten Thermoplast, enthaltend 0,0001 bis 2 Gew.-% im wesentlichen flache Metallkennzeichnungsplättchen mit einer größten Längenausdehnung von kleiner 200µm und einer Dicke von 2-10µm, einer runden oder n-eckigen Form mit n≥4, dadurch gekennzeichnet, dass die Metallkennzeichnungsplättchen keine Aussparungen haben oder Aussparungen haben, die im wesentlichen in der Mitte des Metallkennzeichnungsplättchens liegen, der umlaufenden Aussenkante des Metallkennzeichnungsplättchens nicht näher kommen als 20µm und nicht mehr als 30% der Oberfläche des Metallkennzeichnungsplättchens darstellen.

Die bevorzugt in der vorliegenden Erfindung eingesetzten Metallkennzeichnungsplättchen können bedruckt sein und/oder durch ein Hologramm als Kennzeichnungscode auf dem Plättchen, durch eine willkürlich gebildete Durchgangsformbohrung gekennzeichnet werden, die von beiden Seiten des Kennzeichnungsplättchens sichtbar ist. Außerdem wird das Kennzeichnungsplättchen durch seine externe Form des Plättchens festgelegt. In der bevorzugten Ausführungsform haben die Kennzeichnungsplättchen eine n-eckige polygone Form, mit n≥4, besonders bevorzugt eine sechseckige Form.

Der Durchmesser der Kennzeichnungsplättchen von Seite zu Seite kann z.B. 5 bis 200 µm, bevorzugt 10 bis 150 µm, besonders bevorzugt 10 bis 120 µm betragen.

Auf der Oberfläche der Kennzeichnungsplättchen kann ein Hologramm oder ein anderes Element aufgedruckt sein. Die Kennzeichnungsplättchen können eine Formbohrung eines oder mehrerer alphanumerischen Buchstabens enthalten.

Das Kennzeichnungsplättchen besteht aus Metall bevorzugt aus Nickel und kann z.B. 1 bis 15 µm dick sein, bevorzugt 1 bis 10, besonders bevorzugt 3 bis 8 µm dick sein.

Die Kennzeichnungsplättchen werden vorzugsweise in Thermoplaste, insbesondere transparente Thermoplaste, eingearbeitet. Anschließend können aus dem Thermoplast Schichtstoffe wie Filme oder Folien sowie Mehrschichtverbünde solcher Schichtstoffe hergestellt werden.

Geeignete Thermoplaste sind Polycarbonate oder Copolycarbonate auf Basis von Diphenolen, der Poly- oder Copolyacrylate und Poly- oder Copolymethacrylate wie beispielhaft und vorzugsweise Polymethylmethacrylat (PMMA), Poly- oder Copolymere mit Styrol wie beispielhaft und vorzugsweise transparentes Polystyrol (PS) oder Polystyrolacrylnitril (SAN), transparente thermoplastische Polyurethane, sowie Polyolefine, wie beispielhaft und vorzugsweise transparente Polypropylentypen oder Polyolefine auf der Basis von cyclischen Olefinen (z. B. TOPAS® , Topas Advanced Polymers), Poly- oder Copolykondensate der Terephthalsäure, wie beispielhaft und vorzugsweise Poly- oder Copolyethylenterephthalat (PET oder CoPET) oder glycol-modifiziertes PET (PETG), Polyethylenglykolnaphthenat (PEN), transparente Polsulfone (PSU).

Für die Schicht geeignete thermoplastische Polymethylmethacrylate sind beispielsweise die im Handel befindlichen Plexiglas^{®}-Typen.

Erfindungsgemäß geeignete Folien aus thermoplastischen Kunststoffen sind z.B. solche aus bekannten thermoplastischen aromatischen Polycarbonaten mit Gewichtsmittelmolekulargewichten Mw von 25.000 bis 200.000, vorzugsweise von 30.000 bis 120.000 und insbesondere von 30.000 bis 80.000 (Mw ermittelt über Eta rel in Dichlormethan bei 20° C und einer Konzentration von 0,5 g pro 100 ml) und solche aus bekannten, thermoplastischen Polyarylsulfonen, welche linear (siehe DE-OS 27 35 144) oder verzweigt (siehe DE-OS 27 35 092 bzw. DE-OS 23 05 413) sein können.

Geeignete lineare Polyarylsulfone sind alle bekannten aromatischen Polysulfone oder Polyethersulfone mit Mw (Gewichtsmittelmolekulargewicht gemessen beispielsweise mittels Lichtstreuung) zwischen etwa 15 000 und etwa 55 000, vorzugsweise zwischen etwa 20 000 und etwa 40 000. Derartige Polyarylsulfone sind beispielsweise in DE-OS 17 19 244 bzw. US-PS 33 65 517 beschrieben.

Geeignete verzweigte Polyarylsulfone sind insbesondere die verzweigten Polyarylethersulfone gemäß DE-OS 23 05 413 bzw. US-PS 39 60 815, deren Mw (Gewichtsmittelmolekulargewicht, gemessen beispielsweise mittels Lichtstreuung) zwischen etwa 15 000 und etwa 50 000, vorzugsweise zwischen etwa 20 000 und 40 000 liegen. (Weitere Einzelheiten dazu siehe DE-AS 30 10 143).

Ebenfalls geeignet sind Folien aus thermoplastischen Celluloseestern, thermoplastischen Polyvinylchloriden, thermoplastischen Styrol-Acylnitril-Copolymerisaten und thermoplastischen Polyurethanen.

Geeignete Celluloseester werden nach üblichen Verfahren durch Veresterung der Cellulose mit aliphatischen Monocarbonsäureanhydriden, vorzugsweise Essigsäure- und Buttersäure- oder Essigsäure- und Propionsäureanhydrid, gewonnen.

Die Viskosität der Celluloseester soll 0,3 bis 0,5 Poise, gemessen als 20 gew.%ige Lösung in Aceton, betragen. Vorzugsweise zu verwendende Celluloseester weisen im Falle der Acetobutyrate einen Essigsäuregehalt von 17 bis 23 Gew.-% und einen Buttersäuregehalt von 45 bis 50 Gew.-%, im Falle der Acetopropionate einen Propionsäuregehalt von 61 bis 69 Gew.-% und einen Essigsäuregehalt von 2 bis 7 Gew.-% auf. Die OH-Zahlen liegen üblicherweise zwischen 4 und 25. Die mittleren Gewichtsmittel der Molekulargewichte Mw liegen zwischen 10 000 und 1 000 000, vorzugsweise zwischen 100 000 und 500 000.

Geeignete thermoplastische Polyvinylchloride sind beispielsweise die im Handel befindlichen PVC-Typen.

Geeignete thermoplastische Styrol-Acrylnitril-Copolymerisate sind Mischpolymerisate des Styrols mit vorzugsweise Acrylnitril die z.B. durch Suspensionspolymerisation in Gegenwart von Katalysatoren aus den Monomeren bzw. der Mischung der Monomeren mit Mw von 10 000 bis 600 000 erhalten werden (Mw wird gemessen in DMF bei C = 5 g/l und 20°C). Literatur dazu siehe Beilsteins Handbuch der organischen Chemie, vierte Auflage, Duttes Ergänzungswerk B 1.5, Seiten 1163-1169, Springer Verlag 1964, H. Ohlinger, Polystyrol 1. Teil, Herstellungsverfahren und Eigenschaften der Produkte, Springer Verlag (1955).

Die thermoplastischen Harze, z.B. Styrol/Acrylnitril oder alpha -Methylstyrol/Acrylnitril-Copolymerisate können nach bekannten Verfahren hergestellt werden, z.B. durch Massepolymerisation, Lösungspolymerisation, Suspensionspolymerisation und Emulsionspolymerisation.

Cycloolefin-Copolymere sind den Patentschriften der Fa. Mitsui-Chemicals US 5 912 070 bzw. der Fa. Ticona GmbH EP 765 909 beschrieben.

Zur Herstellung der erfindungsgemäßen Schichten können thermoplastische Polyurethane verwendet werden.

Zur Herstellung der Schichtstoffe, insbesondere Folien kann auf DE-OS 25 17 033 und auf DE-OS 25 31 240 verwiesen werden.

Die Folien können einseitig mattiert oder einseitig strukturiert sein. Dies wird erreicht, indem die Schmelze des thermoplastischen Kunststoffs durch eine Breitschlitzdüse ausgepresst wird und die Schmelzfahne über eine mattierte bzw. strukturierte Abkühlwalze abgezogen wird.

Die Schichtstoffe können auch einseitig poliert und einseitig mattiert sein.

Die Dicke der Schichtstoffe ist vorzugsweise 0,05 bis 0,8 mm.

Verbundfolien mit Polyurethanverklebung sind bekannt (DE-OS 25 17 032 und DE-AS 30 10 143).

Bei der thermoplastischen Kunststoffschicht kann es sich entweder um eine einlagige Schicht dieser Kunststoffe handeln, oder um eine mehrlagige Kunststoffschicht aus Einzellagen verschiedener Kunststoffe mit einer Dicke von jeweils 0,050 bis 0,8 mm.

### Beispiele

### Beispiele 1 und 2: Herstellung von Compounds

### Beispiel 1 (erfindungsgemäß)

### Ausgangsmaterial

Es wurden hexagonale Metallkennzeichnungsplättchen der Bezeichnung "OV Dot B" aus Nickel mit einer Dicke von 5 µm und einen Abstand der gegenüberliegenden Seiten von 100 µm eingesetzt. Die Plättchen waren bedruckt, wobei ausschnittsweise die Aufschritt "OVDot" zu lesen war. In der Mitte der Plättchen befand sich ein großes "B" als Durchgangsformbohrung. Der Abstand der Durchgangsformbohrung von den Seiten betrug 25 µm und machte 12,5% der Gesamtfläche des Metallkennzeichnungsplättchen aus.

Durchmesser des Metallkennzeichnungsplättchen, Abstand der Durchgangsformbohrung und Flächenanteil der Durchgangsformbohrung an der Gesamtfläche des Metallkennzeichnungsplättchen sind erfindungsgemäß.

Mit den Metallkennzeichnungsplättchen wurde ein Compound hergestellt.

150 g der oben beschriebenen Metallkennzeichnungsplättchen wurden in einem Intensivmischer mit 2,35 kg Makrolon 3108 550115 Pulver (mittlerer Partikel-Durchmesser 800 µm) vermischt. Makrolon^{®} 3108 550115 hat EU-/FDA-Qualität und enthält keinen UV-Absorber. Die Schmelze-Volumenfließrate (MVR) nach ISO 1133 beträgt 6,0 cm³/(10 min) bei 300 °C und 1,2 kg Belastung.

Bei einem Durchsatz des Extruders von 50 kg/Stunde wurden 47,5 kg Makrolon 3108 550115 Zylinder-Granulat in Gehäuse 1 des Zweiwellenextruder ZSK extrudiert. Über einen Seitenextruder wurde die Metallkennzeichnungsplättchen/Makrolon-Pulvermischung zudosiert. Nach der sechslöchrigen Düsenplatte wurde eine transparente, partikel-haltige Schmelze erhalten, die nach Abkühlung im Wasserbad und Stranggranulation 50 kg Zylindergranulat mit 0,3 Gew.-% Metallkennzeichnungsplättchen ergab.

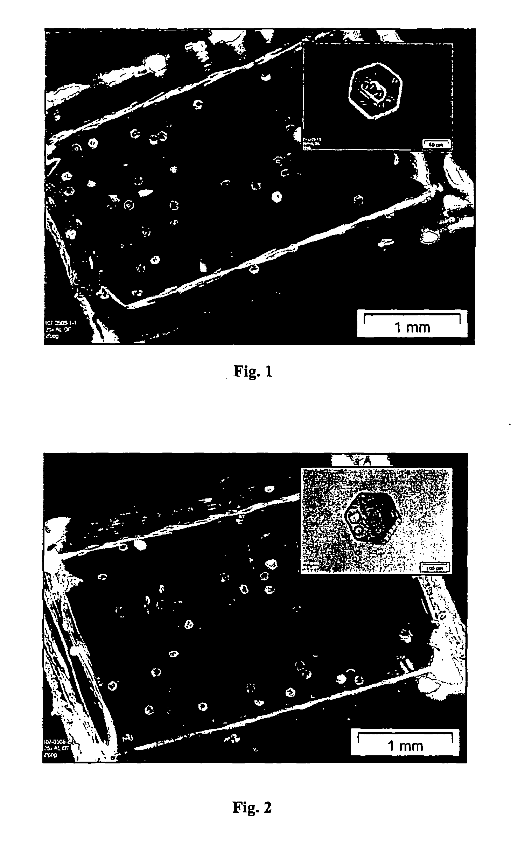

Anhand einer lichtmikroskopischen Aufnahme eines Zylinder-Granulat-Kom (Fig. 1) waren die Metallkennzeichnungsplättchen als kleine licht reflektierende Sechsecke zu erkennen. Es waren keine verbogenen, beschädigten oder sogar zerstörten Plättchen erkennbar. Trotz der Scherung und der Temperaturbelastung war die Durchgangsformbohrung "B" unbeschädigt geblieben. Auch der Aufdruck auf dem Plättchen war gut zu lesen und wurde durch die Verarbeitungstemperatur von 300° C in der Polycarbonat-Schmelze nicht verändert.

### Beispiel 2 (erfindungsgemäß)

### Ausgangsmaterial

Es wurden hexagonale Metallkennzeichnungsplättchen der Bezeichnung "OV Dot O" aus Nickel mit einer Dicke von 5 µm und einen Abstand der gegenüberliegenden Seiten von 100 µm eingesetzt. Die Plättchen waren bedruckt, wobei ausschnittsweise die Aufschrift "OVDot" zu lesen war. In der Mitte der Plättchen befand sich ein großes "O" als Durchgangsformbohrung. Der Abstand der Durchgangsformbohrung von den Seite betrug 25 µm und machte 11,5% der Gesamtfläche des Metallkennzeichnungsplättchen aus.

Durchmesser des Metallkennzeichnungsplättchen, Abstand der Durchgangsformbohrung und Flächenanteil der Durchgangsformbohrung an der Gesamtfläche des Metallkennzeichnungsplättchen sind erfindungsgemäß.

Mit den Metallkennzeichnungsplättchen wurde ein Compound hergestellt.

150 g der oben beschriebenen Metallkennzeichnungsplättchen wurden in einem Intensivmischer mit 2,35 kg Makrolon 3108 550115 Pulver (mittlerer Partikel-Durchmesser 800 µm) vermischt. Bei einem Durchsatz des Extruders von 50 kg/Stunde wurden 47,5 kg Makrolon 3108 550115 Zylinder-Granulat in Gehäuse 1 des Zweiwellenextruder ZSK extrudiert. Über einen Seitenextruder wurde die Metallkennzeichnungsplättehen/Makrolon-Pulvermischung zudosiert. Nach der sechslöchrigen Düsenplatte wurde eine transparente, partikel-haltige Schmelze erhalten, die nach Abkühlung im Wasserbad und Stranggranulation 50 kg Zylindergranulat mit 0,3 Gew.-% Metallkennzeichnungsplättchen "OV Dot O" ergab.

Auf einer lichtmikroskopischen Aufnahme eines Granulat-Koms (Fig. 2) waren die Metallkennzeichnungsplättchen als kleine licht reflektierende Sechsecke zu erkennen. Es waren keine verbogenen, beschädigten oder sogar zerstörten Plättchen erkennbar. Trotz der Scherung und der Temperaturbelastung war die Durchgangsformbohrung "O" unbeschädigt geblieben. Auch der Aufdruck auf dem Plättchen war gut zu lesen und wurde durch die Verarbeitungstemperatur von 300°C in der Polycarbonat-Schmelze nicht verändert.

### Beispiel 3 und 4: Extrusion zu Folie

### Beispiel 3 (erfindunsgemäß)

Aus dem Compound des Beispiels 1 wurde eine Folie extrudiert.

Die verwendete Anlage für die Herstellung der Folien besteht aus
- einem Hauptextruder mit einer Schnecke von 105 mm Durchmesser (D) und einer Länge von 41xD; die Schnecke weist eine Entgasungszone auf;
- einem Adapter;
- einer Breitschlitzdüse mit 1500 mm Breite;
- einem Dreiwalzen-Glättkalander mit horizontaler Walzenanordnung, wobei die dritte Walze um +/- 45° gegenüber der Horizontalen schwenkbar ist;
- einer Rollenbahn;
- einer Einrichtung zum beidseitigen Aufbringen von Schutzfolie;
- einer Abzugseinrichtung;
- Aufwickelstation.

Das Compound aus Beispiel 1 wurde dem Fülltrichter des Extruders zugeführt. Im jeweiligen Plastifiziersystem Zylinder/Schnecke des Extruders erfolgte das Aufschmelzen und Fördern des jeweiligen Materials. Die Materialschmelze wurde über den Adapter anschließend dem Glättkalander zugeführt, dessen Walzen die in der Tabelle 1 genannte Temperatur aufwiesen. Auf dem Glättkalander (bestehend aus drei Walzen) erfolgte die endgültige Formgebung und Abkühlung der Folie. Zur Strukturierung der Folienoberflächen wurden dabei eine Gummi-Walze (fein-matten 2-er Oberfläche) und eine Stahl-Walze (matte 6-er Oberfläche) eingesetzt. Die für die Strukturierung der Folienoberfläche verwendete Gummi-Walze ist in US 4,368,240 der Fa. Nauta Roll Corporation, USA offenbart. Anschließend wurde die Folie durch einen Abzug transportiert. Danach kann eine Schutzfolie aus Polyethylen beidseitig aufgebracht werden und eine Aufwicklung der Folie erfolgen.

**Tabelle 1**

| Verfahrensparameter | |
|---|---|
| Temperatur ender Gehäuse des Extruders Z1 bis Z9 | 200 bis 285° C |
| Temperatur der Düsen Z1 bis Z14 | 300° C |
| Temperatur des Adapters | 290° C |
| Temperatur der Schmelze | 285° C |
| Drehzahl des Extruders | 50 min-1 |
| Temperatur der Gummiwalze 1 | 15° C |
| Temperatur der Walze 2 | 110° C |
| Temperatur der Walze 3 | 140° C |
| Abzugsgeschwindigkeit | 26,3 m/min |
| Durchsatz | 275,6 kg/h |

Um die fertige Folie auch auf ihre Eigenschaften bei der Laserung untersuchen zu können, wurde zusätzlich noch ein Laser-Additiv in die Folie mit eingearbeitet.

Es wurde folgende Metallkennzeichnungsplättchen-haltige und rußhaltige Zusammensetzung dem Extruder zugeführt:
68,6 Gew.-% Makrolon® 3108 550115 (PC der Fa. Bayer MaterialScience AG)
20,0 Gew.-% Masterbatch aus Beispiel 1 (mit 0,3 Gew.-% Metallkennzeichnungsplättchen OV Dot "B")
11,4 Gew.-% Makrolon® 3108 751006 (Rußhaltiges PC der Fa. Bayer MaterialScience AG)

Hieraus wurde eine transparente graue (laserbare) Extrusionsfolie mit einer matten/fein-matten (6-2) Oberfläche, einem Metallkennzeichnungsplättchen-Gehalt von 0,06 Gew.-% und mit einer Dicke von 100 µm erhalten.

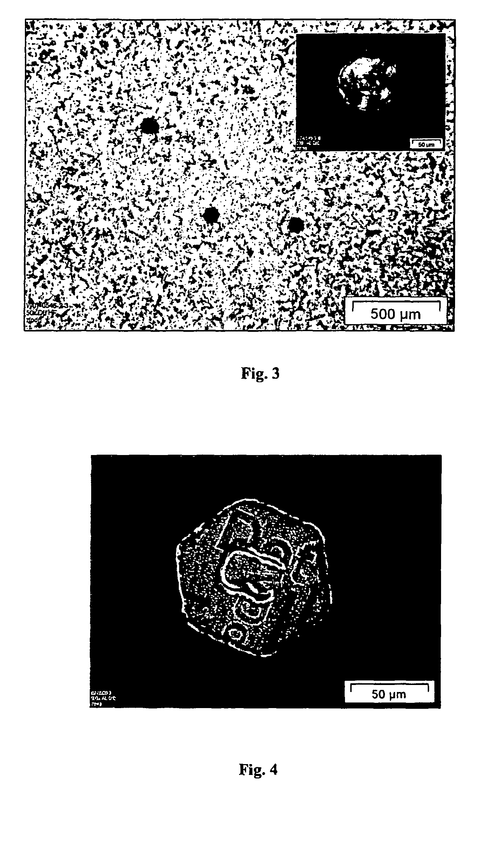

Auf der lichtmikroskopischen Aufnahme der Folie (Fig. 3) waren die Metallkennzeichnungsplättchen als kleine licht dunkle Sechsecke zu erkennen. Die Metallkennzeichnungsplättchen waren über die gesamte Folienfläche gleichmäßig verteilt. Verklumpte agglomerierte Plättchen konnten nicht identifiziert werden. Es waren keine beschädigten oder sogar zerstörten Plättchen erkennbar. Trotz der Scherung und der Temperaturbelastung bei der Folienextrusion war die Durchgangsformbohrung "B" unbeschädigt geblieben.

### Beispiel 4 (erfindungsgemäß)

Aus dem Compound des Beispiels 2 wurde eine Folie extrudiert.

Die verwendete Anlage für die Herstellung der Folien besteht aus
- einem Hauptextruder mit einer Schnecke von 105 mm Durchmesser (D) und einer Länge von 41xD; die Schnecke weist eine Entgasungszone auf;
- einem Adapter;
- einer Breitschlitzdüse mit 1500 mm Breite;
- einem Dreiwalzen-Glättkalander mit horizontaler Walzenanordnung, wobei die dritte Walze um +/- 45° gegenüber der Horizontalen schwenkbar ist;
- einer Rollenbahn;
- einer Einrichtung zum beidseitigen Aufbringen von Schutzfolie;
- einer Abzugseinrichtung;
- Aufwickelstation.

Das Compound aus Beispiel 2 wurde dem Fülltrichter des Extruders zugeführt. Im jeweiligen Plastifiziersystem Zylinder/Schnecke des Extruders erfolgte das Aufschmelzen und Fördern des jeweiligen Materials. Die Materialschmelze wurde über den Adapter anschließend dem Glättkalander zugeführt, dessen Walzen die in der Tabelle 2 genannte Temperatur aufwiesen. Auf dem Glättkalander (bestehend aus drei Walzen) erfolgte die endgültige Formgebung und Abkühlung der Folie. Zur Strukturierung der Folienoberflächen wurden dabei eine Gummi-Walze (fein-matten 2-er Oberfläche) und eine Stahl-Walze (matte 6-er Oberfläche) eingesetzt. Die für die Strukturierung der Folienoberfläche verwendete Gummi-Walze ist in US-4 368 240 der Fa. Nauta Roll Corporation offenbart. Anschließend wurde die Folie durch einen Abzug transportiert. Danach kann eine Schutzfolie aus PE beidseitig aufgebracht werden und eine Aufwicklung der Folie erfolgen.

**Tabelle 2**

| Verfahrensparameter | |
|---|---|
| Temperatur ender Gehäuse des Extruders Z1 bis Z9 | 200 bis 285° C |
| Temperatur der Düsen Z1 bis Z14 | 300° C |
| Temperatur des Adapters | 290° C |
| Temperatur der Schmelze | 284° C |
| Drehzahl des Extruders | 50 min-1 |
| Temperatur der Gummiwalze 1 | 15° C |
| Temperatur der Walze 2 | 110° C |
| Temperatur der Walze 3 | 140° C |
| Abzugsgeschwindigkeit | 26,5 m/min |
| Durchsatz | 275,2 kg/h |

Um die fertige auch auf ihre Eigenschaften bei der Laserung untersuchen zu können, wurde zusätzlich noch ein Laser-Additiv in die Folie mit eingearbeitet.

Es wurde folgende Metallkennzeichnungsplättchen-haltige und rußhaltige Zusammensetzung dem Extruder zugeführt:
68,6 Gew.-% Makrolon® 3108 550115 (PC der Fa. Bayer MaterialScience AG) 20,0 Gew.-% Masterbatch aus Beispiel 2 (mit 0,3 Gew.-% Metallkennzeichnungsplättchen OV Dot "O")
11,4 Gew.-% Makrolon® 3108 751006 (Rußhaltiges PC der Fa. Bayer MaterialScience AG)

Hieraus wurde eine transparente graue (laserbare) Extrusionsfolie mit einer matten/fein-matten (6-2) Oberfläche, einem Metallkennzeichnungsplättchen-Gehalt von 0,06 Gew.-% und mit einer Dicke von 100 µm erhalten.

Auf einer lichtmikroskopischen Aufnahme der Folie waren die Metallkennzeichnungsplättchen als kleine licht dunkle Sechsecke zu erkennen. Die Metallkennzeichnungsplättchen waren über die gesamte Folienfläche gleichmäßig verteilt. Es konnten keine verklumpten agglomerierten Plättchen identifiziert werden. Es waren keine beschädigten oder sogar zerstörten Plättchen erkennbar. Trotz der Scherung und der Temperaturbelastung bei der Folienextrusion ist die Durchgangsformbobrung "O" unbeschädigt geblieben.

### Beispiel 5 (erfindungsgemäß)

Aus den folgenden Folien wurde eine Karte laminiert:

| | |
|---|---|
| Kern-Folie | 375 µm Makrofol ID 6-4 Farbe 010207 (weiß) |
| Oben und unten jeweils eine Lage | |
| Erfindungsgemäße Folie: | 100 µm Folie aus Beispiel 3, 6-2 |
| Overlay-Folie | 100 µm Makrofol ID 6-2, Farbe 000000 (natur) |

Die Folien wurden in einer Presse der Fa. Bürkle bei 10 bar und 180° C laminiert. Danach wurden die Metallerkennungsplättchen mittels Lichtmikroskopie auf ihre Erscheinung untersucht.

Auf einer lichtmikroskopischen Aufnahme eines Metallerkennungsplättchen (Fig. 4) war zu erkennen, dass Sie durch den Laminierprozess nicht beschädigt oder zerstört wurden. Trotz der Druckes und der Temperaturbelastung bei der Lamination ist die Durchgangsformbohrung "B" unbeschädigt geblieben. Der Aufdruck auf dem Plättchen war klar lesbar. Die ursprüngliche Oberflächenstrukturierung der Folie war während des Laminierprozesses glatt gepresst worden.

### Beispiel 6 (nicht erfindungsgemäß)

### Ausgangsmischung

Es wurde eine Mischung aus verschieden großen 4- und 6-eckigen Metallkennzeichnungsplättchen mit der Bezeichnung "OV Dot Mix" aus Nickel mit einer Dicke von 5 µm und einen Abstand der gegenüberliegenden Seiten von 50 bis 500 µm eingesetzt. Die Plättchen waren bedruckt, wobei ausschnittsweise die Aufschritt "OVDot" zu lesen war. In der Mitte der Plättchen befanden sich verschiedene Buchstabenkombinationen als Durchgangsformbohrungen.

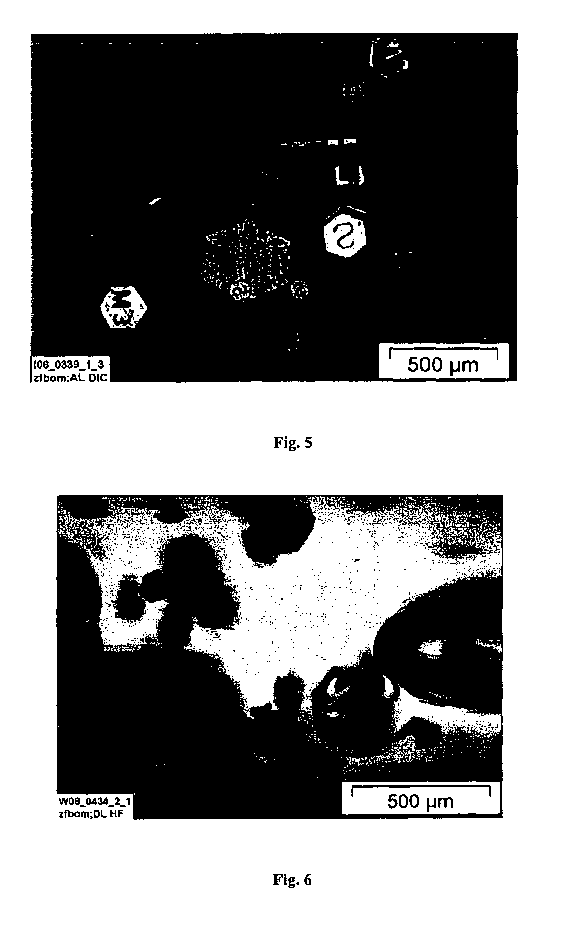

Fig. 5 zeigt eine lichtmikroskopische Aufnahme der Mischung aus verschieden großen 4- und 6-eckigen Metallkennzeichnungsplättchen.

Die Quadrate hatten als Durchgangsformbohrungen die Großbuchstaben G, H, I, J, K und L, eine Seitenlänge von 500 µm, und einen Abstand der Buchstaben von der Seite von 32 µm. Der Flächenanteil der Durchgangsformbohrung beträgt 12,2% von der Gesamtfläche.

Die 6-eckigen Plättchen mit M3 als Durchgangsformbohrung haben einen Flächenanteil der Durchgangsformbohrung mit 18% und einen Abstand der Durchgangsformbohrung zur Seite von 16 µm. Der Durchmesser betrug 200 µm von Seite zu Seite.

Mit den Metallkennzeichnungsplättchen OV Dot Mix wurde ein Compound hergestellt.

30 g Metallkennzeichnungsplättchen "OV Dot Mix" wurden in einem Intensivmischer mit 418 g Makrolon 3108 550115 Pulver (mittler Partikel-Durchmesser 800 µm) vermischt. Bei einem Durchsatz des Extruders von 3 kg/Stunde wurden 2kg Makrolon 3108 550115 Zylinder-Granulat in Gehäuse 1 des Zweiwellenextruder ZSK der Fa. Brabender extrudiert. Es wurde eine transparente, partikelhaltige Schmelze erhalten, die nach Abkühlung im Wasser/Luftbad und Stranggranulation ein Zylindergranulat mit 1,23 Gew.-% Metallkennzeichnungsplättchen ergab.

Auf der lichtmikroskopischen Aufnahme eines Granulat-Koms (Fig. 6) war zu erkennen, dass die ca. 500 µm großen Metallkennzeichnungsplättchen als verbogene Sechsecke vorliegen und den Anforderungen der Erfindung nicht entsprechen. Zwar erfüllen diese Quadrate 2 Anforderungen hinsichtlich des Flächenanteils der Durchgangsformbohrung und den Abstand, jedoch ist das Plättchen zu groß und wird im Extruder mechanisch verbogen bzw. sogar zerstört.

Die ursprünglich 6-eckigen Plättchen mit M3 als Durchgangsformbohrung erfüllen ebenfalls nicht die Anforderungen der vorliegenden Erfindung: Auch wenn der Flächenanteil der Durchgangsformbohrung mit 18% innerhalb des erfindungsgemäßen Bereiches liegt, zu ist der Abstand der Durchgangsformbohrung zur Seite ist mit 16 µm zu klein, und der Durchmesser mit 200 µm von Seite- zu- Seite zu groß. Bei der Compoundierung wurden daher die "M3"-Plättchen durch die Scherung und/oder Temperatur-Belastung größtenteils zerstört. Es waren viele Bruchstücke im Granulat zu erkennen.

Durchmesser des Metallkennzeichnungsplättchen und Abstand der Durchgangsformbohrung sind nicht erfindungsgemäß. Flächenanteil der Durchgangsformbohrung an der Gesamtfläche des Metallkennzeichnungsplättchen ist erfindungsgemäß.

### Beispiel 7 (nicht erfindungsgemäß>

Aus dem Compound des Beispiels 6 wurde eine Folie nach dem Chill-Roll-Verfahren extrudiert.

Die verwendete Anlage für die Herstellung der Folien besteht aus
- einem Hauptextruder mit einer Schnecke von 30mm Durchmesser (D) und einer Länge von 27xD;
- einer Breitschlitzdüse mit 300 mm Breite;
- einer Glätt-Walze;
- einer Abzugseinrichtung;
- Aufwickelstation.

Das Compound aus Beispiel 6 wurde dem Fülltrichter des Extruders zugeführt. Im jeweiligen Plastifiziersystem Zylinder/Schnecke des Extruders erfolgte das Aufschmelzen und Fördern des jeweiligen Materials. Die Materialschmelze wurde durch die Breitschlitzdüse gedrückt und auf der Glättwalze abgelegt. Auf der Glättwalze erfolgte die endgültige Formgebung und Abkühlung der Folie.

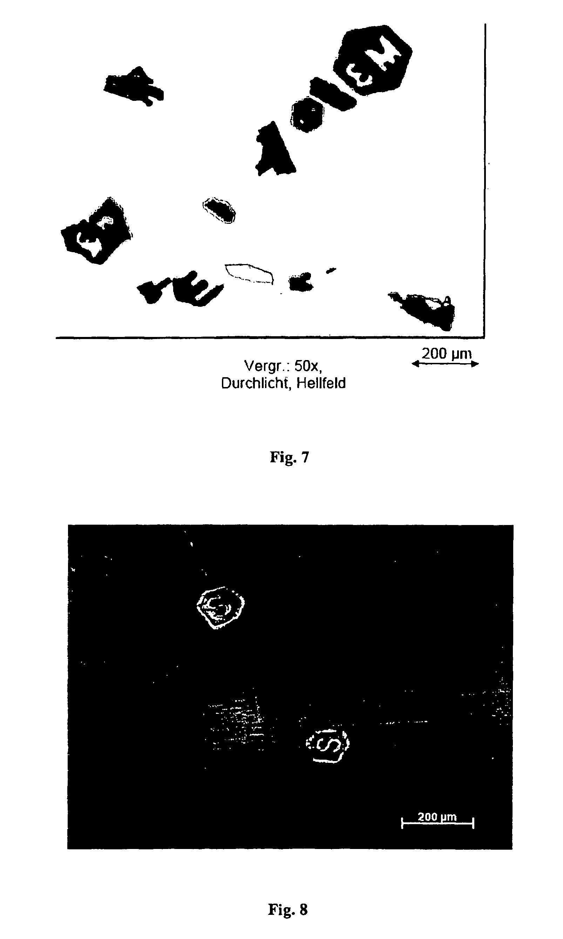

Auf der lichtmikroskopischen Aufnahme der Folie (Fig. 7) war zu erkennen, dass. die ca. 500 µm großen Metallkennzeichnungsplättchen als verbogene Sechsecke vorliegen und den Anforderungen der Erfindung nicht entsprechen. Zwar erfüllen diese Quadrate 2 Anforderungen hinsichtlich des Flächenanteils der Durchgangsformbohrung und den Abstand, jedoch ist das Plättchen zu groß und wird im Extruder mechanisch verbogen bzw. sogar zerstört.

Die ursprünglich 6-eckigen Plättchen mit M3 als Durchgangsformbohrung erfüllen ebenfalls nicht die Anforderungen der vorliegenden Erfindung: Auch wenn der Flächenanteil der Durchgangsformbohrung mit 18% innerhalb des erfindungsgemäßen Bereiches liegt, zu ist der Abstand der Durchgangsformbohrung zur Seite ist mit 16 µm zu klein, und der Durchmesser mit 200 µm von Seite- zu- Seite zu groß. Bei der Folienextrusion wurden daher weitere "M3"-Plättchen durch die Scherung und/oder Temperatur-Belastung zerstört. Es sind ebenfalls viele Bruchstücke zu erkennen.

Lediglich die ca. 100 µm großen Metallkennzeichnungsplättchen waren unbeschädigt.

### Beispiel 8 (erfindungsgemäß)

### Ausgangsmaterial

Es wurden hexagonale Metallkennzeichnungsplättchen der Bezeichnung "OV Dot S" aus Nickel mit einer Dicke von 5 µm und einen Abstand der gegenüberliegenden Seiten von 100 µm eingesetzt. Die Plättchen waren bedruckt, wobei ausschnittsweise die Aufschritt "OVDot" zu lesen war. In der Mitte der Plättchen befand sich ein großes "S" als Durchgangsformbohrung. Der Abstand der Durchgangsformbohrung von der Seite beträgt 24 µm und macht 26,2% der Gesamtfläche des Metallkennzeichnungsplättchen aus.

Mit den Metallkennzeichnungsplättchen wurde ein Compound hergestellt.

150 g Metallkennzeichnungsplättchen "OV Dot S" wurden in einem Intensivmischer mit 1,35 kg Makrolon 3108 550115 Pulver (mittlerer Partikel-Durchmesser 800 µm) vermischt. Bei einem Durchsatz des Extruders von 50 kg/Stunde wurden 48,5 kg Makrolon 3108 550115 Zylinder-Granulat in Gehäuse 1 des Zweiwellenextruder ZSK 53 extrudiert. Über einen Seitenextruder wurde die Metallkennzeichnungsplättchen/Makrolon-Pulvermischung zudosiert. Nach der dreilöchrigen Düsenplatte wurde eine transparente, partikelhaltige Schmelze erhalten, die nach Abkühlung im Wasserbad und Stranggranulation 50 kg Zylindergranulat mit 0,3 Gew.-% Metallkennzeichnungsplättchen "OV Dot S" ergab.

**Tabelle 3**

| Verfahrensparameter | |
|---|---|
| Temperatur im Gehäuse des Extruders Z1 bis Z8 | 220 bis 250° C |
| Masse-Druck | 20,7 bar |
| Temperatur der Schmelze | 270° C |
| Drehzahl des Extruders | 100 min-1 |
| Abzugsgeschwindigkeit | 30 m/min |
| Durchsatz | 30 kg/h |

Auf der lichtmikroskopischen Aufnahme eines Granulat-Korns (Fig. 8) waren die Metallkennzeichnungsplättchen als Sechsecke zu erkennen. Es waren keine beschädigten oder sogar zerstörten Plättchen erkennbar. Trotz der Scherung und der Temperaturbelastung bei der Folienextrusion war die Durchgangsformbohrung "S" unbeschädigt geblieben.

Durchmesser des Metallkennzeichnungsplättchen, Abstand der Durchgangsformbohrung und Flächenanteil der Durchgangsformbohrung an der Gesamtfläche des Metallkennzeichnungsplättchen sind erfindungsgemäß.

### Beispiel 9 (erfindungsgemäß)

Zur Extrusion einer Polycarbonat-Folie von einer Breite von 350 mm wurde das in Beispiel 8 beschriebene Polycarbonat eingesetzt.

Die verwendete Anlage besteht aus
- einem Extruder der Firma Stork mit einer Schnecke von 37 mm Durchmesser (D) und einer Länge von 24xD. Die Schnecke weist eine Entgasungszone auf;
- Schmelzepumpe
- einer Breitschlitzdüse mit 350 mm Breite;
- Lippenspalt: 0,8 mm
- einer Abzugseinrichtung;
- Aufwickelstation.

Von der Düse gelangt die Schmelze auf die Gießwalze und anschließend auf die Kühlwalze, wobei die Walzen die in der Tabelle 4 genannte Temperatur aufweisen. Anschließend wird die Folie durch einen Abzug transportiert und danach aufgewickelt.

**Tabelle 4**

| **Verfahrensparameter** | |
|---|---|
| Temperatur Zylinder 1 bis 16 | 230 bis 280° C |
| Masse-Temperatur | 292° C |
| Drehzahl Schmelzepumpe | 28 min⁻¹ |
| Temperatur Düse 1 | 240° C |
| Temperatur Düse 2 | 240° C |
| Temperatur Düse 3 | 240° C |
| Drehzahl Extruder | 40 min⁻¹ |
| Temperatur Walze 1 | 40° C |
| Temperatur Walze 2 | 120° C |
| Temperatur Walze 3 | 140° C |
| Massedruck | 81 bar |
| Folien-Dicke | 100 µm |

Es wurde folgende Metallkennzeichnungsplättchen-haltige Zusammensetzung dem Extruder zugeführt:
100,0 Gew.-% Compound aus Beispiel 8 (mit 0,3 Gew.-% Metallkennzeichnungsplättchen OV Dot "S")

Hieraus wurde eine transparente Extrusionsfolie mit einer glatten/matten (1-4) Oberfläche, einem Metallkennzeichnungsplättchen-Gehalt von 0,3 Gew.-% und mit einer Dicke von 100 µm erhalten.

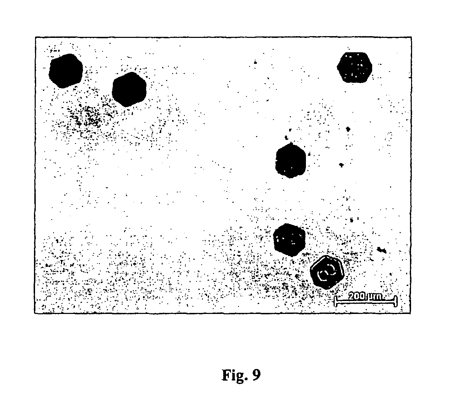

Auf der lichtmikroskopischen Aufnahme der Folie (Fig. 9) waren die Metallkennzeichnungsplättchen als kleine licht dunkle Sechsecke zu erkennen. Es waren keine beschädigten oder sogar zerstörten Plättchen erkennbar. Trotz der Scherung und der Temperaturbelastung bei der Folienextrusion ist die Durchgangsformbohrung "S" unbeschädigt geblieben.

Durchmesser des Metallkennzeichnungsplättchen, Abstand der Durchgangsformbohrung und Flächenanteil der Durchgangsformbohrung an der Gesamtfläche des Metallkennzeichnungsplättchen sind erfindungsgemäß.

## Patentansprüche

1. Transparenter Thermoplast, enthaltend 0,0001 bis 2 Gew.-% flache Metallkennzeichnungsplättchen mit einer größten Längenausdehnung von kleiner 200 µm und einer Dicke von 2-10 µm, einer runden oder n-eckigen Form mit n ≥ 4, **dadurch gekennzeichnet, dass** die Metallkennzeichnungsplättchen keine Aussparungen haben oder Aussparungen haben, die im wesentlichen in der Mitte des Metallkennzeichnungsplättchens liegen, der umlaufenden Aussenkante des Metallkennzeichnungsplättchens nicht näher kommen als 20µm und nicht mehr als 30% der Oberfläche des Metallkennzeichnungsplättchens darstellen.

2. Transparenter Thermoplast nach Anspruch 1, **dadurch gekennzeichnet, dass** die Metallkennzeichnungsplättchen 4-, 5-, 6- oder 7-eckig oder rund sind.

3. Transparenter Thermoplast nach Anspruch 1, **dadurch gekennzeichnet, dass** der transparente Thermoplast Polycarbonat ist.

4. Transparenter Thermoplast nach Anspruch 1, **dadurch gekennzeichnet, dass** die Metallkennzeichnungsplättchen aus Nickel sind.

5. Transparenter Thermoplast nach Anspruch 1, **dadurch gekennzeichnet, dass** die Aussparungen die Form von Buchstaben oder Zahlen haben, insbesondere S, X, Punkt, oder Kreis.

6. Transparenter Thermoplast nach Anspruch 1, enthaltend 0,01 bis 0,1 Gew.-%, bevorzugt 0,06 % Gew.-% der Metallkennzeichnungsplättchen.

7. Folie, enthaltend den transparenten Thermoplast nach Anspruch 1.

8. Mehrschichtiges Erzeugnis, enthaltend den transparenten Thermoplasten nach Anspruch 1 oder die Folie nach Anspruch 7.

9. Mehrschichtiges Erzeugnis nach Anspruch 8, wobei das Erzeugnis eine Karte ist.

10. Verwendung des transparenten Thermoplasten nach Anspruch 1 oder der Folie nach Anspruch 7 zur Herstellung von Karten.

11. Verfahren zur Herstellung einer Folie nach Anspruch 7, wobei
a) der transparente Thermoplast nach Anspruch 1 zu einem Compound compoundiert wird;
b) der Compound aus Schritt a) zu einer Folie extrudiert wird.

12. Verfahren zur Herstellung einer Karte nach Anspruch 9, wobei
a) der transparente Thermoplast nach Anspruch 1 zu einem Compound compoundiert wird;
b) der Compound aus Schritt a) zu einer Folie extrudiert wird; und
c) die Folie aus Schritt b) zu einer Karte verarbeitet wird.

13. Verfahren nach Anspruch 12, **dadurch gekennzeichnet, dass** in Schritt c) die Folie auf ein Substrat laminiert wird.

14. Transparenter Thermoplast nach Anspruch 1, **dadurch gekennzeichnet, dass** auf die Oberfläche der Metallkennzeichnungsplättchen ein Hologramm aufgedruckt ist.

## Claims

1. Transparent thermoplastic, comprising from 0.0001 to 2 wt. % of flat metal identification platelets with a greatest longitudinal elongation of less than 200 µm and a thickness of 2-10 µm, and with a round or polygonal shape, **characterized in that** the metal identification platelets do not have any cavities or have cavities that lie substantially in the centre of the metal identification platelet, do not come closer than 20 µm to the circumferential outer edge of the metal identification platelet, and do not account for more than 30% of the surface area of the metal identification platelet.

2. Transparent thermoplastic according to Claim 1, where the metal identification platelets are tetragonal, pentagonal, hexagonal, heptagonal or round.

3. Transparent thermoplastic according to Claim 1, where the transparent thermoplastic is polycarbonate.

4. Transparent thermoplastic according to Claim 1, where the metal identification platelets are made of nickel.

5. Transparent thermoplastic according to Claim 1, where the cavities have the shape of letters or numerals, in particular S, X, dot or circle.

6. Transparent thermoplastic according to Claim 1, comprising from 0.01 to 0.1 wt. %, preferably 0.06 wt. % of the metal identification platelets.

7. Foil comprising the transparent thermoplastic according to Claim 1.

8. Multi-layer product comprising the transparent thermoplastic according to Claim 1 or the foil according to Claim 7.

9. Multi-layer product according to Claim 8, where the product is a card.

10. Use of the transparent thermoplastic according to Claim 1 or of the foil according to Claim 7 for producing cards.

11. Process for the production of a foil according to Claim 7, which comprises
a) compounding the transparent thermoplastic according to Claim 1 to give a compounded material; and
b) extruding the compounded material from step a) to give a foil.

12. Process for the production of a card according to Claim 9, which comprises
a) compounding the transparent thermoplastic according to Claim 1 to give a compounded material;
b) extruding the compounded material from step a) to give a foil; and
c) processing the foil from step b) to give a card.

13. Process according to Claim 12, where in step c) the foil is laminated onto a substrate.

14. Transparent thermoplastic according to Claim 1, where a hologram has been printed onto the surface of the metal identification platelets.

## Revendications

1. Thermoplastique transparent, contenant 0,0001 à 2 % en poids de plaquettes métalliques d'identification ayant une dimension longitudinale la plus grande inférieure à 200 µm et une épaisseur de 2 à 10 µm, d'une forme ronde ou à n angles avec n ≥ 4, **caractérisé en ce que** les plaquettes métalliques d'identification ne comportent pas d'évidements ou comportent des évidements qui se situent essentiellement au milieu de la plaquette métallique d'identification, qui ne s'approchent pas à moins de 20 µm du bord externe circonférentiel de la plaquette métallique d'identification et qui ne représentent pas plus de 30 % de la surface de la plaquette métallique d'identification.

2. Thermoplastique transparent selon la revendication 1, **caractérisé en ce que** les plaquettes métalliques d'identification ont 4, 5, 6 ou 7 angles ou sont rondes.

3. Thermoplastique transparent selon la revendication 1, **caractérisé en ce que** le thermoplastique transparent est un polycarbonate.

4. Thermoplastique transparent selon la revendication 1, **caractérisé en ce que** les plaquettes métalliques d'identification sont en nickel.

5. Thermoplastique transparent selon la revendication 1, **caractérisé en ce que** les évidements ont la forme de lettres ou de chiffres, notamment S, X, un point ou un cercle.

6. Thermoplastique transparent selon la revendication 1, contenant 0,01 à 0,1 % en poids, de préférence 0,06 % en poids, des plaquettes métalliques d'identification.

7. Feuille, contenant le thermoplastique transparent selon la revendication 1.

8. Produit multicouche, contenant le thermoplastique transparent selon la revendication 1 ou la feuille selon la revendication 7.

9. Produit multicouche selon la revendication 8, dans lequel le produit est une carte.

10. Utilisation du thermoplastique transparent selon la revendication 1 ou de la feuille selon la revendication 7 pour la fabrication de cartes.

11. Procédé de fabrication d'une feuille selon la revendication 7, dans lequel
a) le thermoplastique transparent selon la revendication 1 est mélangé en une composition ;
b) la composition de l'étape a) est extrudée en une feuille.

12. Procédé de fabrication d'une carte selon la revendication 9, dans lequel
a) le thermoplastique transparent selon la revendication 1 est mélangé en une composition ;
b) la composition de l'étape a) est extrudée en une feuille ; et
c) la feuille de l'étape b) est transformée en une carte.

13. Procédé selon la revendication 12, **caractérisé en ce qu'**à l'étape c), la feuille est stratifiée sur un substrat.

14. Thermoplastique transparent selon la revendication 1, **caractérisé en ce qu'**un hologramme est imprimé sur la surface des plaquettes métalliques d'identification.
